# FASCICULE DE BREVET EUROPEEN

(11) **EP 4 448 312 B1**
(45) Date de publication et mention de la délivrance du brevet: **04.02.2026**
(21) Numéro de dépôt: 22847544.8
(22) Date de dépôt: 09.12.2022
(51) Int. Cl.: B60J 5/04, B60J 5/06, E05D 15/58, E05F 15/665, E05F 15/689, E05F 15/632, E05F 17/00

(54) **CAISSE DE VÉHICULE AUTOMOBILE POURVUE D'UNE OUVERTURE RECEVANT UN OUVRANT ARTICULÉ ENTRE UNE POSITION BASSE FERMÉE ET UNE POSITION HAUTE OUVERTE**
KRAFTFAHRZEUGKAROSSERIE MIT EINER ÖFFNUNG ZUR AUFNAHME EINES ÖFFNUNGSFLÜGELS, DER ZWISCHEN EINER GESCHLOSSENEN NIEDRIGEN POSITION UND EINER OFFENEN HOHEN POSITION ANGELENKT IST
MOTOR VEHICLE BODY PROVIDED WITH AN OPENING RECEIVING AN OPENING LEAF ARTICULATED BETWEEN A CLOSED LOW POSITION AND AN OPEN HIGH POSITION

(30) Priorité: 16.12.2021 FR 2113648
(43) Date de publication de la demande: 23.10.2024
(73) Titulaire: Esnault, Paul, 64121 Montardon (FR)
(72) Inventeur: Esnault, Paul, 64121 Montardon (FR)
(74) Mandataire: Santarelli
(86) Numéro de dépôt international: PCT/FR2022/052298
(87) Numéro de publication internationale: WO 2023/111428

(56) Documents cités:
- WO-A1-03/045723
- WO-A1-2018/100295
- CN-A- 110 700 717
- CN-U- 217 892 475
- DE-A1- 102018 202 386

## Description

### Domaine technique de l'invention

La présente invention concerne une caisse de véhicule automobile et notamment d'une berline, d'un coupé ou d'un SUV, comportant au moins un flanc latéral muni d'une ouverture définie par une embrasure et recevant un ouvrant de type portière.

### Technique antérieure

Dans le domaine automobile, il existe plusieurs types d'ouvrants permettant à un utilisateur de pouvoir entrer ou sortir de son véhicule. Ces différents types de portières sont caractérisés par leur cinématique d'entraînement leur permettant d'évoluer entre une position d'ouverture, dans laquelle un utilisateur à accès à l'habitacle du véhicule, et une position de fermeture, dans laquelle la porte interdit l'accès à l'habitacle du véhicule.

Il existe ainsi d'une manière générale plusieurs familles d'ouvrants, à savoir :
- les ouvrants de type « battant » ou « à la française » qui sont les plus couramment utilisés dans l'industrie automobile, un côté de ces ouvrants pivotant autour d'un axe sensiblement vertical (comportant habituellement plusieurs charnières mécaniques) entre une position fermée obturant l'ouverture et une position ouverte débordant latéralement de la caisse ; les inconvénients principaux que l'on peut relever pour ce type de portières est qu'elles débordent de plusieurs dizaines de centimètres (environ 50 cm à 100 cm) par rapport au flanc du véhicule, ce qui peut engendrer des difficultés pour ouvrir la portière et sortir du véhicule si un mur un autre véhicule est placé trop proche, des difficultés pour ouvrir la portière pour entrer dans son véhicule faute d'espace latéral suffisant (pour les mêmes raisons que celles évoquées précédemment), des risques d'abimer le rebord de la portière contre un mur ou un poteau, ou d'abimer la carrosserie du véhicule adjacent, et surtout des risques très importants en terme de sécurité routière puisque l'ouverture soudaine de la portière par le conducteur ou un passager peut créer un obstacle imprévu pour un autre véhicule (camion, bus, voiture) venant de derrière et pour un individu circulant à vélo ou en moto/scooter/trottinette (risque d'impact plus ou moins violent, voire mortel, surtout en agglomération), et ce malgré les différentes campagnes de la sécurité routière sur le sujet ;
- les ouvrants de type "coulissant" qui se déplacent dans un plan sensiblement vertical entre une position fermée et une position ouverte ; leurs principal inconvénient est que les panneaux de ces portières sont le plus souvent adaptés à des utilitaires de type fourgonnettes ou à des véhicule de type « monospace », et sont donc difficiles à implanter sur une berline ou un coupé (en raison notamment de la courbure des flancs entre le plancher et le toit). La cinématique de ces portières est par ailleurs complexe, fragile (rail extérieur), et parfois difficile à manipuler à la main. Enfin, l'aspect esthétique de ces portières reste assez peu flatteur ;
- les ouvrants de type "élytre" qui pivotent autour d'un axe horizontal transversal plus ou moins perpendiculaire au plan des ouvrants entre une position fermée et une position ouverte relevée vers le haut (l'arrière de la portière constituant en général le point le plus haut de celle-ci ) ; ce type de portière est parfaitement adaptée pour les voitures de sport haut de gamme (McLaren ^{®} modèles F1 ou P1, Ferrari ^{®} modèle La Ferrari ^{®}, Lamborghini ^{®} modèles Countach ^{®} ou Diablo ^{®}, Koenigsegg ^{®} modèle Regera ^{®}) qui ne possèdent que deux portes longues et qui sont, le plus souvent, extrêmement basses ; et
- les ouvrants de type à levée verticale, communément appelés "portières papillon", composés d'un panneau de structure qui pivote autour d'un axe sensiblement horizontal situé en haut de l'embrasure de l'ouverture entre une position fermée et une position ouverte déployée au-dessus du toit du véhicule, que l'on retrouve sur la DeLorean ^{®} modèle DMC-12 ^{®}, la Mercedes ^{®} modèle SLS AMG ^{®} ou la Tesla ^{®} modèle X ^{®} ; ces systèmes sont particulièrement complexes à fabriquer et nécessitent d'importantes modifications de la structure de la caisse et notamment du toit (découpe, ajout de renforts apportant la résistance mécanique nécessaire pour supporter les contraintes générées par le poids de la portière et par les efforts subis par le châssis lorsque le véhicule automobile est en déplacement, cinématique), lesquelles sont totalement incompatibles avec une série d'options telles que toit ouvrant, galerie de toit, toit panoramique ou barres de toit. Il résulte de ces dispositions un surpoids non négligeable pour les véhicules dotés de portières de type à levée verticale par rapport aux véhicules comprenant des portières d'autres types, ainsi qu'un surcoût substantiel. Un autre inconvénient réside dans l'allongement du temps de fabrication d'un véhicule comprenant des portières de type à levée verticale du fait des arrangements particuliers qu'il faut prévoir dans le châssis du véhicule. En outre, les portières de type à levée verticale de l'état de la technique présentent des problèmes de sécurité en cas de choc latéral, c'est-à-dire selon un axe plus ou moins perpendiculaire à la direction d'avance du véhicule. L'encombrement vertical de ces portières une fois relevées, même sur des modèles de sports très bas, restent par ailleurs extrêmement importants de sorte que l'utilisation de ces portières dans la majorité des parkings personnels ou souterrains est délicate, voire impossible. Ce type de portières est donc le plus souvent réservée pour les véhicules de prestige de petite série pour une clientèle hors norme en capacité d'achat.

Le concept de portière double pour l'automobile (c'est-à-dire donnant accès aux places avant et arrière d'un même côté du véhicule) existe déjà avec le concept de la porte double type papillon. Cette solution est élégante et rempli bien sa fonction de porte double, mais elle n'est pas sans débord et exige toujours une hauteur sous plafond supérieure à 2,30 mètres, ce qui la rend inexploitable dans les parkings urbains. Ce concept de porte papillon double est souvent présenté dans les salons de l'automobile sur des concept car/show car qui ne seront jamais fabriqués par un constructeur qui industrialise pour un marché de masse. Ce type de porte est trop cher à fabriquer car elle nécessite une construction de plateforme spécifique comme pour un cabriolet. De plus, elle pose un problème de sécurité en cas de choc latéral car en général le montant central est supprimé. Ce concept est donc réservé aux « super cars », avec des sièges avant spéciaux capables d'assumer l'ancrage et le choc en énergie cinétique d'une ceinture de sécurité prévues pour les places avant.

Ainsi, chacun de ces types d'ouvrants présente certes des avantages, en particulier un design original et une cinématique de manœuvre esthétiquement attirante pour les ouvrants de type "papillon" et "élytre", mais également de très nombreux inconvénients.

Le document WO 2018/100295 A1 décrit une caisse similaire au préambule de la revendication 1.

### Présentation de l'invention

Un but de l'invention est de concevoir un nouveau type d'ouvrant qui allie notamment une simplicité d'utilisation et un encombrement réduit lors des phases de manœuvre, tout en apportant une dimension esthétique nouvelle et une sécurité très largement accrue.

A cet effet, selon un premier aspect, la présente invention se rapporte à une caisse de véhicule automobile comportant une structure porteuse/châssis s'étendant entre une extrémité avant et une extrémité arrière et présentant un plancher, un toit, et au moins un flanc latéral s'étendant au moins en partie entre lesdites deux extrémités, le plancher et le toit, ledit flanc latéral étant pourvu d'une ouverture définie par une embrasure et recevant un unique ouvrant, tel qu'une portière, articulé entre au moins une première position extrême basse fermée dans laquelle ledit ouvrant occulte ladite ouverture et une deuxième position extrême haute ouverte dans laquelle ledit ouvrant est à l'écart de ladite ouverture et est positionné au moins en partie au-dessus du toit, caractérisée en ce que la structure porteuse comporte un montant traversant verticalement ladite ouverture et un unique chariot de transport vertical est montée mobile en translation de haut en bas et de bas en haut le long dudit montant pour faire passer ledit ouvrant de la première position extrême basse fermée à la deuxième position extrême haute ouverte, et inversement.

Cette solution et cette cinématique totalement novatrices permettent notamment d'ouvrir une portière de véhicule avec extrêmement peu de place entre ce dernier et un obstacle tel qu'un mur ou un autre véhicule. Il rend l'ouverture de la portière simple, rapide, extrêmement sécurisante (aucun risque de collision avec des cyclistes ou des motards).

L'invention est mise en œuvre selon les modes de réalisation et les variantes exposées ci-après, lesquelles sont à considérer individuellement ou selon toute combinaison techniquement opérante.

Avantageusement, l'ouvrant présentant un profilé externe convexe épousant le flanc latéral de ladite structure porteuse dans la première position extrême basse fermée, la distance « d » entre ledit profilé externe et le flanc latéral est en permanence inférieure à quelques centimètres (typiquement moins de 10 cm voire moins selon la courbure de la porte et de la carrosserie) tout au long du passage dudit ouvrant de la première position extrême basse fermée à la deuxième position extrême haute ouverte, de sorte que ledit ouvrant est de type à ouverture vertical sans débord latéral.

Cette solution dite « sans débord latéral permet de réduire considérablement l'encombrement latéral du véhicule dans toutes les positions, et surtout lors de l'ouverture/fermeture des portières. Ainsi, au-delà de l'aspect sécuritaire liée au type de cinématique mise en œuvre, il est possible de munir un véhicule de type berline, coupé, SUV ou monospace de portières présentant une grande dimension longitudinale, voire verticale, sans que celles-ci débordent latéralement de la caisse (au niveau du toit mais également du bas de caisse), ou sur une dimension ne dépassant pas quelques centimètres. Pour rappel, les portières à ouverture à la française peuvent déborder latéralement de la caisse du véhicule de plus de 50 à 80 cm selon leurs dimensions, leur implantation (positionnement des charnière), le type d'ouverture et l'angle d'ouverture.

De préférence, l'ouvrant présente une portion inférieure montée sur un arbre longitudinal de rotation solidaire du charriot de transport vertical de sorte que ledit ouvrant peut prendre une position intermédiaire basculée extérieurement dans laquelle une portion supérieur de ce dernier s'écarte latéralement de l'ouverture et du flanc, avant que ledit ouvrant se déplace verticalement de ladite position intermédiaire basculée vers la deuxième position extrême haute ouverte.

Avec cette solution, la portière effectue un premier mouvement de rotation pour écarter sa partie supérieure du haut de l'embrasure de l'ouverture afin de permettre sa remontée ultérieur selon la cinématique prévue à cet effet à l'aide du charriot de transport vertical.

Plus spécifiquement, l'angle de pivotement de l'ouvrant entre la première position extrême basse fermée et la position intermédiaire basculée est inférieur à 20°, de préférence compris entre environ 10° et environ 15°.

Selon un aspect particulièrement intéressant de la présente invention, l'arbre longitudinal de rotation est relié à un premier moteur électrique équipé d'un motoréducteur pour le basculement de l'ouvrant.

Selon un mode de réalisation préférée de la présente invention, l'ouvrant présente une vitre mobile et un deuxième moteur électrique équipé d'un motoréducteur pour abaisser cette dernière avant le déplacement de l'ouvrant de la première position extrême basse fermée vers la deuxième position extrême haute ouverte, et pour la remonter une fois que ledit ouvrant est de retour dans la première position extrême basse fermée.

Cette solution permet notamment de protéger la vitre lors des déplacements verticaux de la portière.

Selon un aspect complémentaire, le charriot de transport vertical est équipé d'au moins un troisième moteur électrique équipé d'un motoréducteur pour le déplacement de l'ouvrant le long du montant vertical.

Selon une variante de réalisation, le charriot de transport vertical est équipé de deux moteurs électriques disposés de part et d'autre du montant central et reliés à un motoréducteur commun.

De manière préférée, tous les moteurs sont rassemblés en un seul moteur commun porté par le charriot de transport vertical, ce qui simplifie les câblages, l'alimentation électrique et le fonctionnement. Bien entendu, le moteur sera dimensionné en conséquence et comprendra plusieurs systèmes intégré de motoréducteurs à planétaire et/ou crémaillère.

Selon une autre alternative, le premier moteur de basculement est intégré au chariot de transport vertical.

De même, le deuxième moteur de vitre est intégré à l'ouvrant.

Selon un mode particulier de réalisation de la présente invention, l'ouvrant comporte une batterie secondaire et des connecteurs électriques et le montant vertical comporte des plots de connexion électrique coopérant avec lesdits connecteurs pour relier la batterie secondaire à une batterie principale de la caisse uniquement dans la première position extrême basse fermée de l'ouvrant afin de recharger ladite batterie secondaire.

Ainsi, les connexions électriques utilisées pour faire fonctionner les moteurs assurant les différents mouvements sont extrêmement simples, efficaces et fiables.

Selon un autre aspect particulièrement intéressant de la présente invention, l'ouvrant est équipé d'au moins un crochet adapté pour s'agripper à une partie supérieure de l'embrasure lorsque l'ouvrant est dans la deuxième position extrême haute ouverte afin de maintenir celui-ci dans cette position.

Ainsi, la portière est maintenue fermement en position haute une fois relevée, ce qui permet d'éviter qu'elle bouge et abime le charriot ou le montant vertical par exemple à cause d'un vent fort ou d'une action délibérée d'une personne mal intentionnée qui tenterait de déplacer la porte latéralement en secouant latéralement ou de haut en bas sa partie avant ou arrière.

De préférence, l'ouvrant présente un premier crochet en partie avant basse et un second crochet en partie arrière basse, chacun de ces crochets venant en prise dans un rebord prévu dans l'embrasure de l'ouverture pour immobiliser ledit ouvrant dans la deuxième position extrême haute ouverte, lesdits crochets venant se loger librement à l'intérieur d'ouvertures respectives prévues à cet effet dans une partie inférieure de l'embrasure dans la première position extrême basse fermée dudit ouvrant.

Ainsi, les crochets sont intégrés dans le châssis et se placent automatiquement et facilement dans la position basse escamotée ou la position haute d'utilisation haute selon la position de la portière.

Avantageusement, l'ouvrant est monté sur le charriot de transport vertical de sorte que le poids dudit ouvrant est réparti de manière identique de part et d'autre dudit charriot, c'est-à-dire entre l'avant et l'arrière de l'ouvrant, pour son équilibrage.

Cette solution permet à la portière, qui présente une grande dimension longitudinale, de ne pas créer de porte-à-faux et d'être stable lors de ses mouvements.

Selon un aspect particulièrement pratique de la présente invention, le charriot de transport vertical est solidaire du montant et l'ouvrant est monté de manière amovible et démontable sur le charriot à l'aide d'une paire de pions mécaniques d'assemblage/montage/centrage coopérant avec deux mâchoires de serrage pour son immobilisation.

Cette solution permet de fabriquer l'essentiel de la portière chez un sous-traitant ou dans un endroit particulier d'une usine de montage, puis de venir la monter, selon les options choisies, de manière extrêmement rapide sur une chaîne de montage. Les aspects rapidité, économie et praticité de montage pour les ouvriers sont donc réunis grâce à cette fonctionnalité.

De manière avantageuse, les pions mécaniques sont solidaires du charriot de transport vertical et les mâchoires de serrage sont solidaires de l'ouvrant.

Selon un mode de réalisation préféré, l'ouvrant comporte un tambour rotatif conique à ressort de rappel équilibrant son poids pour son passage de la première position extrême basse fermée à la deuxième position extrême haute ouverte, et inversement, ledit ressort supportant la majorité du poids de l'ouvrant entre les deux positions extrêmes.

Ainsi, les mouvements de la portière sont assistés pour que le poids transporté soit le plus faible possible, ce qui réduit l'usure des pièces en mouvements et les besoin en énergie électrique des moteurs concernés.

Préférentiellement, le charriot de transport vertical est mobile le long d'au moins un rail ménagé sur le montant vertical.

En particulier, le charriot de transport vertical est pourvu de quatre paires de galets de guidage, deux premières paires de galets superposés verticalement qui coulissent le long d'un premier rails de guidage à section en « U » prévu sur le montant vertical, et deux secondes paires de galets superposés verticalement coulissant dans un second rail de guidage à section en « U » monté de manière amovible sur le montant vertical, en face et parallèlement audit premier rail de guidage.

Cette solution permet un « blocage » latéral et longitudinal de la portière et donc un guidage vertical optimisé le long du montant vertical.

De manière complémentaire, l'axe de rotation de l'ensemble des galets des premières paires s'étend dans le sens longitudinal de la caisse, sensiblement parallèlement à la plus grande dimension de l'ouvrant, et l'axe de rotation de l'ensemble des galets des secondes paires s'étend dans le sens transversal de la caisse, perpendiculairement à l'axe de rotation de l'ensemble des galets des premières paires.

Ainsi, cela permet de répartir les efforts subis par les galets et provoqués par le poids et les mouvements de la portière.

De préférence, l'ouvrant est dépourvu de poignée et renferme une carte électronique et un transpondeur pour son ouverture et sa fermeture automatique à distance sans intervention humaine.

Avantageusement, dans la deuxième position extrême haute ouverte, au moins 90%, de préférence 100% de l'ouvrant surplombe l'embrasure de l'ouverture.

Enfin, la présente invention concerne également un véhicule automobile comportant une caisse tel que décrite précédemment.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 est une vue de côté d'un véhicule automobile comportant une caisse conforme à la présente invention et pourvue d'un ouvrant dans une première position extrême basse fermée,
[Fig. 2] la figure 2 est une vue similaire à la figure 1 dans laquelle l'ouvrant est dans une deuxième position extrême haute ouverte,
[Fig. 3] la figure 3 est une vue schématique en coupe transversale d'un côté de la caisse et d'un ouvrant dans laquelle ledit ouvrant est dans une première position extrême basse de fermeture,
[Fig. 4] la figure 4 est une vue similaire à la figure 3 dans laquelle l'ouvrant est dans une intermédiaire,
[Fig. 5] la figure 5 est une vue similaire à la figure 4 dans laquelle l'ouvrant est pivoté vers l'extérieur de la caisse,
[Fig. 6] la figure 6 est une vue similaire à la figure 5 dans laquelle l'ouvrant est dans une deuxième position extrême haute d'ouverture,
[Fig. 7] la figure 7 est une vue de détail en coupe longitudinale de dessus d'un côté de la caisse avec l'ouvrant dans la première position extrême basse fermée,
[Fig. 8] la figure 8 est une vue similaire à la figure 7 dans laquelle l'ouvrant est pivoté vers l'extérieur de la caisse,
[Fig. 9] la figure 9 est une vue schématique en coupe de profil d'un charriot de transport de l'ouvrant dans une position de fermeture (traits pleins) et dans une position pivoté (traits pointillés),
[Fig. 10] la figure 10 est une vue de dessous de l'ouvrant montrant des moyens d'accostage au chariot de transport,
[Fig. 11] la figure 11 est une vue en coupe longitudinale du charriot et d'une portion de l'ouvrant accosté sur ce dernier
[Fig. 12] la figure 12 est une vue en coupe d'éléments mécaniques de pivotement de l'ouvrant,
[Fig. 13] la figure 13 est une autre vue en coupe longitudinale de moyens de translation de l'ouvrant,
[Fig. 14] la figure 14 est une autre vue de détail de rails de glissement montant central,
[Fig. 15] la figure 15 est une vue en coupe de détail de l'ouvrant et des moyens de déplacement, et
[Fig. 16] la figure 16 est une vue schématisé en coupe illustrant, dans une première position, un système à courroie de type équilibreur pour compenser le poids de l'ouvrant,
[Fig. 17] la figure 17 est une vue schématisé en coupe illustrant, dans une deuxième position, un système à courroie de type équilibreur pour compenser le poids de l'ouvrant.
[Fig. 18] la figure 18 est une vue schématisé en coupe illustrant, dans une troisième position, un système à courroie de type équilibreur pour compenser le poids de l'ouvrant

### Description des modes de réalisation

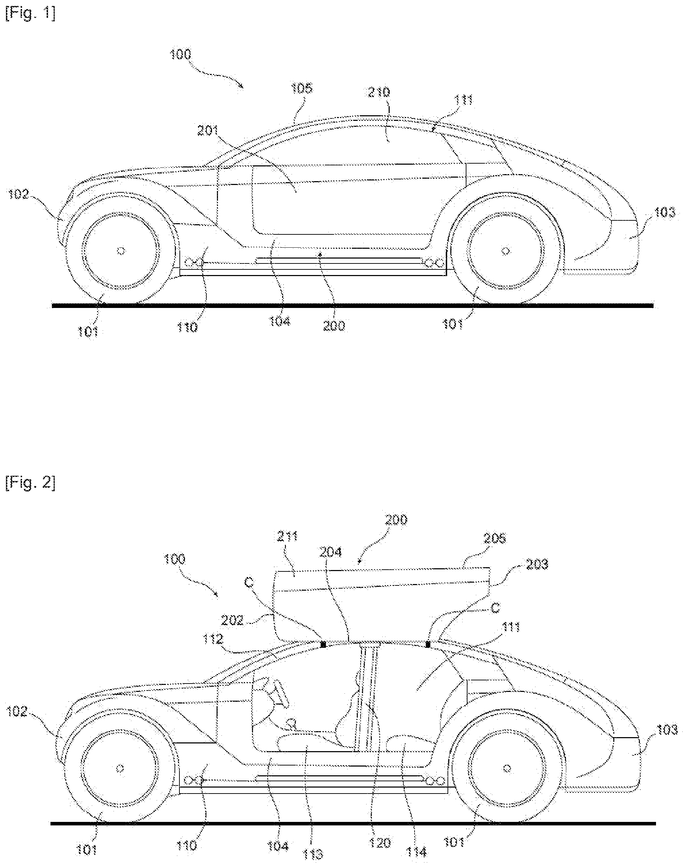

Les figures 1 et 2 représentent un véhicule 100 de type berline montré de profil et comportant typiquement des roues 101 avant et arrière surmontées par une caisse 110 en métal (alliage d'aluminium ou acier, avec ou sans élément en carbone) s'étendant entre une extrémité avant 102, une extrémité arrière 103, un plancher 104 et un toit 105 du véhicule 100.

Cette caisse 110 présente deux ouvertures latérales 111 droite et gauche définies chacune par une embrasure 112 (ou encadrement) et permettant l'accès aux sièges avant 113 (conducteur ou passager) et aux sièges arrière 114 (passagers). Cette ouverture latérale 111 est divisée longitudinalement en une partie pour l'accès aux sièges avant et une partie pour l'accès aux sièges arrière, cette division étant matérialisée par un montant vertical (ou meneau) de renfort rigide 120 s'étendant essentiellement entre le plancher 104 et le toit 105 et présentant une courbure allant en se rétrécissant (quand on regarde la caisse 110 de face ou de dos) à mesure que l'on s'élève en hauteur du plancher 104 vers le toit 105.

L'embrasure 112 de l'ouverture 111 considérée (droite et/ou gauche) reçoit typiquement un ouvrant 200 matérialisé par une portière dite « double », c'est-à-dire une portière de voiture qui, dans une première position extrême basse fermée (figure 1), empêche l'accès à la fois à la place avant 113 (le conducteur dans le cas présent) et aux places arrière 114, et, dans une seconde position extrême haute ouverte, permet l'accès simultané à l'avant et à l'arrière du véhicule.

Cette portière 200 comporte une structure 201 (appelé également panneau de portière) réalisée en métal embouti (acier, alliage d'aluminium, autre matériau utilisé dans la construction automobile) ou en composite thermoformé tel que de la fibre de verre ou de carbone, ou comportant à la fois des portions en métal, pour des questions de rigidité et de résistance aux contraintes, et des portions en matériaux composites pour des questions de légèreté.

Conformément à la présente invention, la portière 200 est mobile verticalement selon une cinématique bien particulière qui sera décrite ci-après. Le panneau 201 s'étend entre un rebord supérieur avant 202, un rebord arrière 203, un rebord inférieur 204 et un rebord supérieur 205.

Cette portière 200 peut prendre, après pivotement latéral vers l'extérieur de la caisse 110 puis coulissement sensiblement vertical vers le haut, une deuxième position extrême haute ouverte (figure 2) dans laquelle elle ne déborde pas latéralement de la largeur du véhicule (la porte est donc dite « sans débord ») et se retrouve surélevée en l'air au-dessus de l'embrasure 112 de l'ouverture 111 et de la quasi-totalité du toit 105.

La portière 200 comporte une vitre latérale affleurante 210, également double (mais une version avec deux vitres indépendantes se rejoignant verticalement de manière étanche à l'air pourrait être envisagée), qui est mobile en translation entre une position haute ou elle obture une zone supérieure de l'ouverture 111 de la caisse 110, en épousant la forme de la partie supérieure de l'embrasure 112, et une position base où elle vient s'insérer dans l'épaisseur du panneau 201 de la portière 200 afin d'y être escamotée sous son rebord supérieur 205, et inversement. Ce mouvement sensiblement vertical est rendu possible grâce à un moteur électrique 206 de type connu intégré à la portière 200 et pourvu de préférence d'un motoréducteur destiné à démultiplier le mouvement et le rendre plus fluide. La portière 200 comporte également une carte électronique 207 pour le pilotage de différents éléments de déplacement et pour recevoir un signal d'ouverture/fermeture émis à distance par un transpondeur de type connu. Une batterie 208 lithium/ion de 36V et un transformateur de courant sont également intégré à la portière 200 pour alimenter d'autres moteurs qui seront décrits ultérieurement.

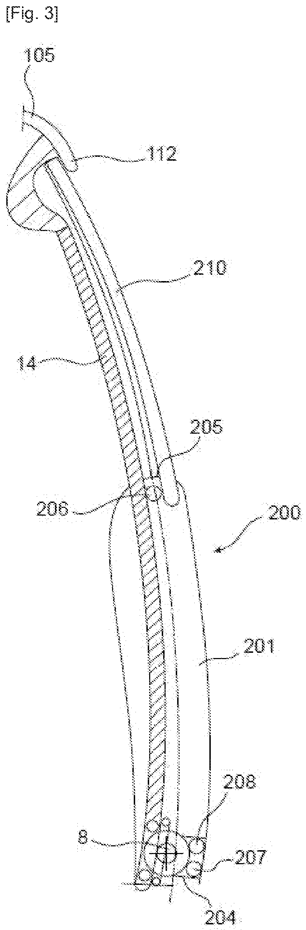

Les figures 3 à 8 décrivent en détail et de manière séquentielle les différentes étapes de mouvement de la portière 200 pour passer de la première position extrême basse de fermeture (figure 1) à la deuxième position extrême haute d'ouverture (figure 2).

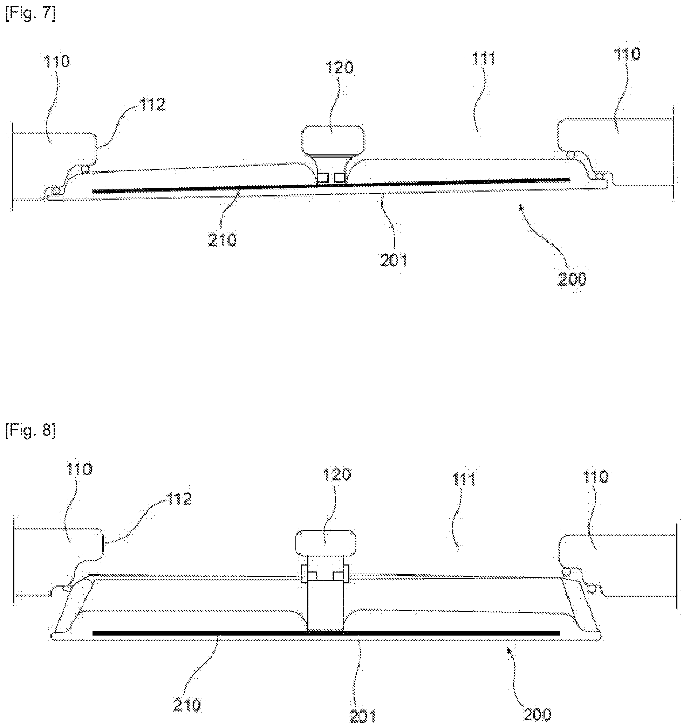

Plus précisément, dans la première position illustrée par la figure 3 et la figure 7, la portière 200 obture l'intégralité de l'embrasure 112 de l'ouverture latérale 111 à laquelle elle est associée, et la double vitre affleurante 210 est dans sa position haute de fermeture étanche. La portière 200 est donc totalement fermée, l'ouverture 111 est close de manière étanche par le panneau rigide 201 et par la double vitre 210, et il n'est pas possible de rentrer ou sortir du véhicule 100. C'est la position dans laquelle le véhicule 100 se trouve en général lorsqu'il roule ou est stationné.

Lorsque le conducteur ou un passager souhaite entrer dans le véhicule, il s'approche de la caisse 110, une distance de quelques mètres étant suffisante, de sorte que le signal émis par un transpondeur (non représenté) qu'il porte sur lui (sur un porte clé, une carte magnétique ou intégré dans un téléphone portable ou une montre intelligente) puisse être reçu par le capteur de la carte électronique 207 de la portière 200. Une fois le signal reçu, la cinématique d'ouverture se déclenche donc à distance.

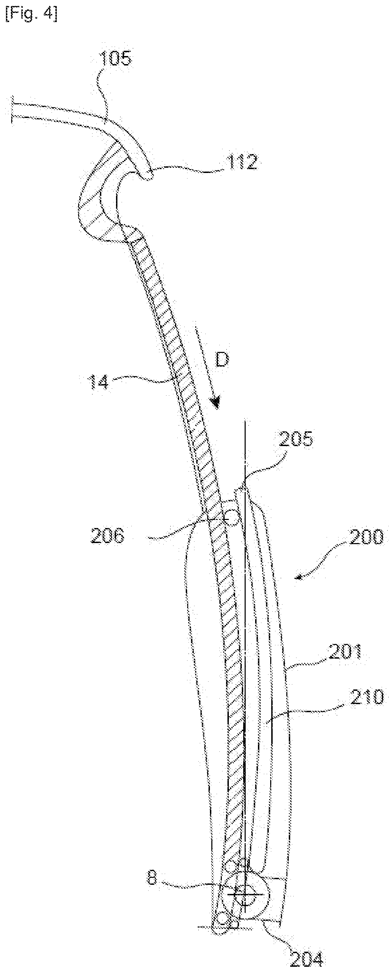

La figure 4 illustre ainsi une première position intermédiaire dans laquelle le moteur 206 provoque le mouvement de descente selon la flèche D de la double vitre affleurante 210 dans l'épaisseur de la portière 200 afin de s'escamoter intégralement (elle ne déborde pas ou quasiment pas du rebord supérieur 205). Cette étape dure en général quelque seconde et permet notamment de protéger la double vitre 210 lors des mouvements ultérieurs et d'éviter une prise au vent importante de la portière (réduction de la surface soumise à d'éventuelles bourrasques de vent pouvant gêner la montée de la portière voire abimer son système de déplacement).

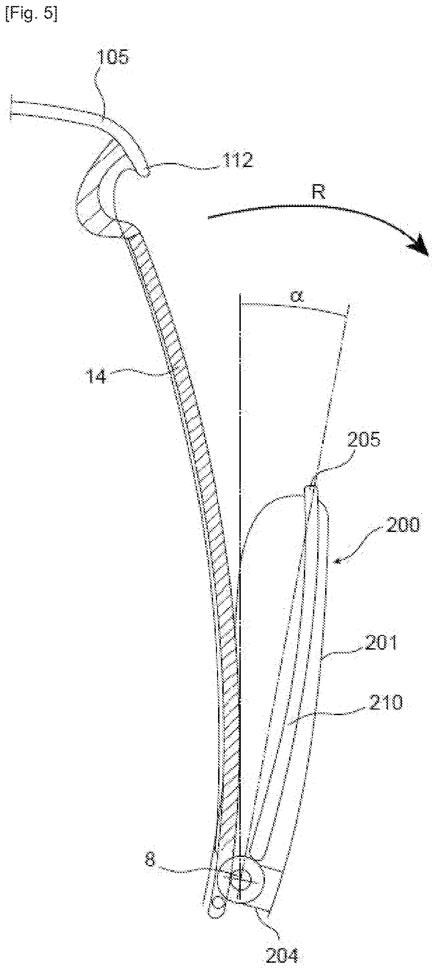

Une fois la double 210 vitre abaissée et logé dans le panneau 201, un moteur 9 également intégré à la portière 200 fait pivoter cette dernière autour d'un axe longitudinal mécanosoudé 8 de gros diamètre solidaire du bas du panneau 201 selon un angle α d'environ 10 à 15° conformément à la figure 5 de sorte que son rebord supérieur 205 s'écarte très légèrement de la surface externe de la caisse 110 (surface virtuelle définie par l'embrasure 112), typiquement sur une distance d (voir figure 8 également) inférieur à 10 cm, voire moins selon la courbure de la portière et de la carrosserie.

Plus précisément, comme cela est visible sur les figures 3 à 6, étant donné la courbure de la caisse 110 qui va en général toujours en se rétrécissant selon une certaine courbure du plancher vers le toit (notamment pour des questions d'aérodynamisme/Scx et d'esthétique), l'écartement latéral maximum de la portière 200 au niveau de son rebord supérieur 205 est en réalité très faible par rapport à la largeur de la caisse 110 mesurée au niveau du plancher 104. En effet, dans la position fermée de la portière 200, le rebord supérieur 205 de cette dernière est en réalité situé légèrement en retrait de quelque centimètres vers l'intérieur de la caisse 110 par rapport bord latéral externe du plancher 104. Ainsi, lorsque la portière 200 bascule vers l'extérieur, son rebord supérieur 205 n'est en réalité quasiment pas débordant par rapport au bord externe du plancher 104 (si l'on regarde le véhicule par au-dessus comme sur la figure 8). Dans le cas d'une courbure relativement importante de la caisse 110 et/ou d'un rebord supérieur 205 de portière 200 suffisamment haut (véhicule de type SUV et/ou vitre de faible hauteur, comme dans certains coupés ou voiture de sport), le débord latéral de la portière 200 au niveau de son rebord supérieur 205 (point logiquement le plus éloigné de la surface externe de la caisse) par rapport au bord externe du plancher 104 peut même être nul, y compris après le basculement de la portière 200 vers l'extérieur conformément à la figure 5.

Cette cinématique très particulière et cet aspect très innovant de la présente invention présentent ainsi un avantage considérable sur toutes les solutions de l'art antérieur en termes d'encombrement latéral puisque la portière 200 peut s'ouvrir alors même que le véhicule 100 est situé très proche d'un obstacle potentiel tel qu'un mur, un muret, un poteau ou une autre voiture garée latéralement à côté. Le mouvement de basculement de la portière 200, même s'il s'effectue vers l'extérieur en direction de la personne qui l'ouvre, n'est absolument pas dérangeant et ne présente aucun risque. Bien au contraire, comme présenté dans la partie introductive de la présente demande, il n'y a plus aucun risque qu'un cycliste, un motard ou un autre véhicule (camion, voiture) percute la portière 200 dans sa position ouverte puisque cette dernière ne déborde pas latéralement ou quasiment pas de la caisse 110. Cette solution est donc extrêmement performante du point de vue de la sécurité routière dont on sait qu'il s'agit d'un enjeu national majeur.

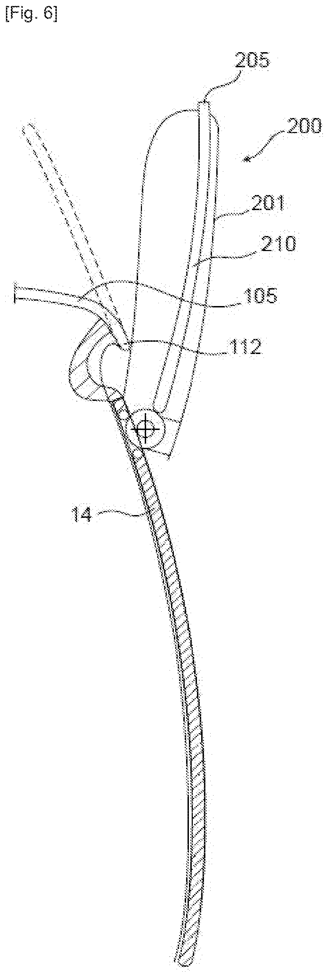

Une fois la portière 200 basculée vers l'extérieur de la caisse 110, celle-ci est délacer vers le haut le long du montant central courbe 120, toujours de manière automatique, afin d'atteindre la deuxième position extrême haute ouverte, comme illustré par la figure 6. Dans cette position (également illustrée par la figure 2), la portière 200 est ainsi placée à son point le plus haut et elle est maintenue à l'aide de crochets inférieurs C pour éviter de bouger (descente imprévue ou pivotement vertical) de sorte que personnes peuvent entrer dans le véhicule 100 à l'avant comme à l'arrière.

Une fois les personnes à l'intérieur du véhicule, le mécanisme utilisé pour faire pivoter et monter la portière 200 fonctionne de manière inverse, c'est-à-dire que la portière 200 redescend le long du montant central 120 jusqu'à sa position la plus basse (figure 5), puis le panneau 201 pivote latéralement pour se rabattre contre la caisse 110 (figure 4) et enfin la double vitre 210 sors du panneau 201 et remonte pour venir fermer l'ouverture 111 de la caisse 110 de manière étanche (figure 3 et 1).

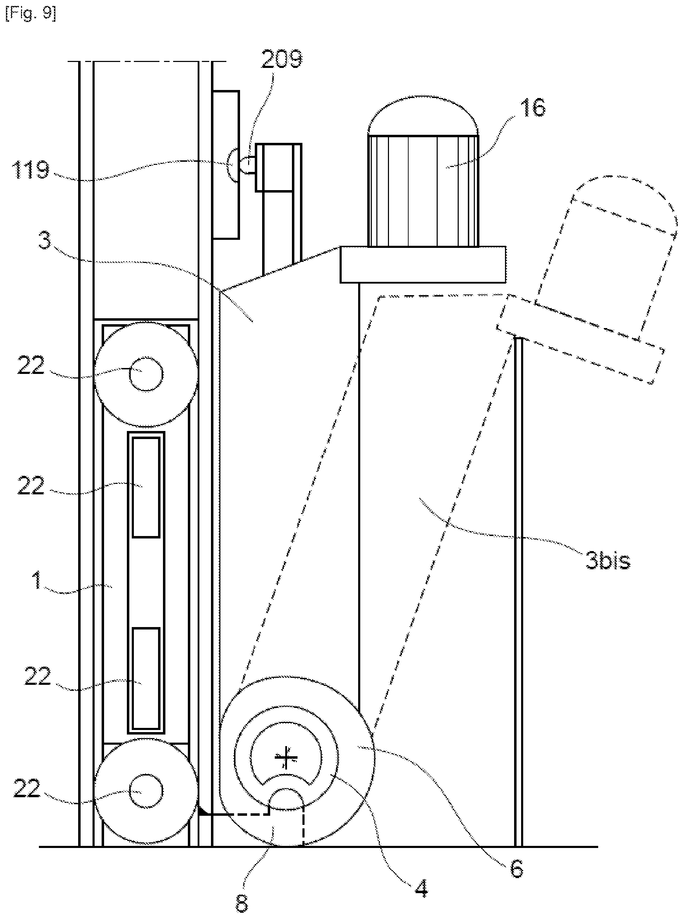

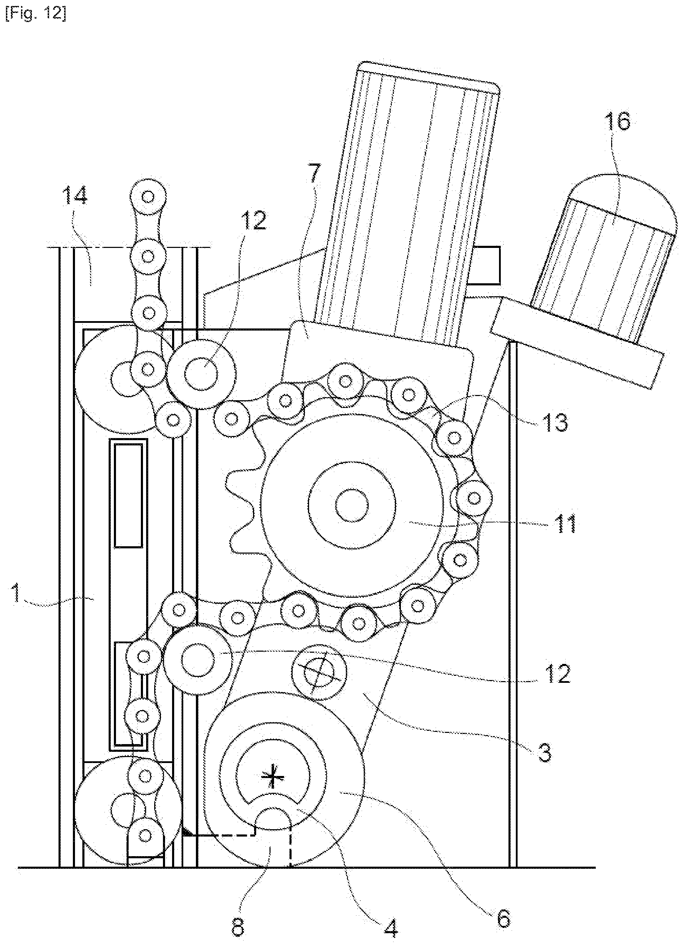

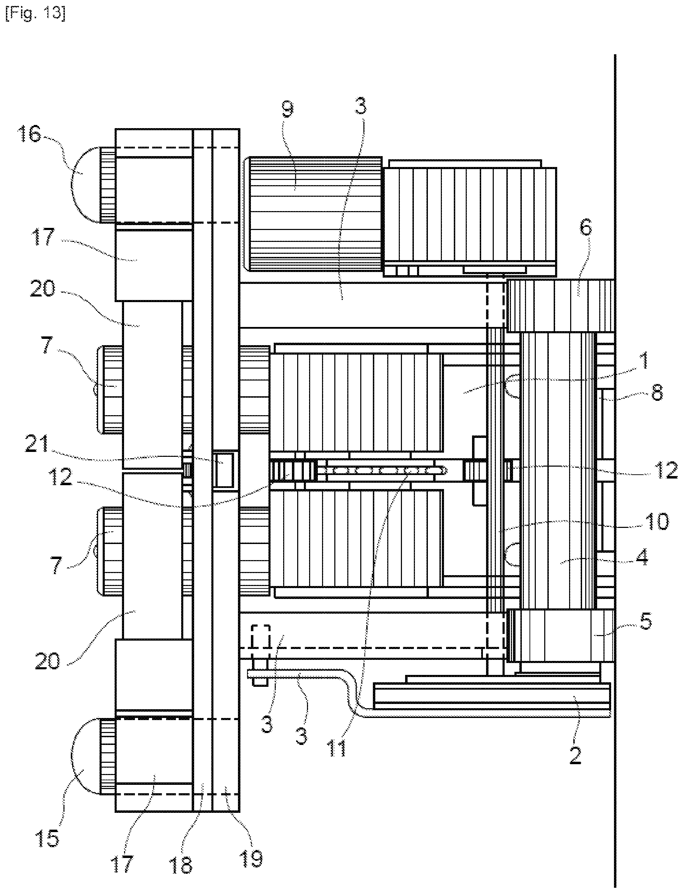

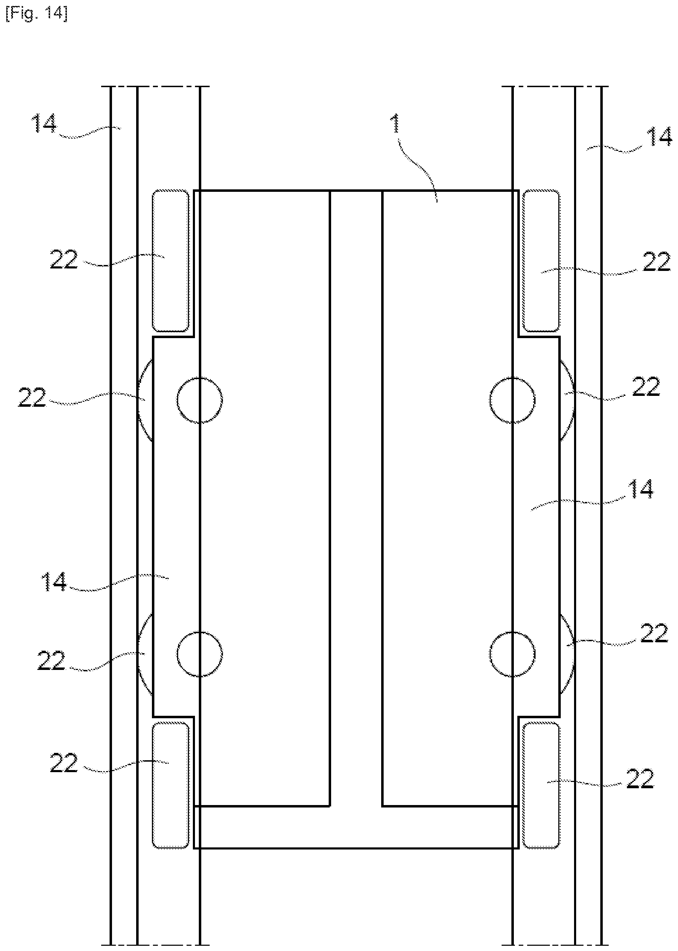

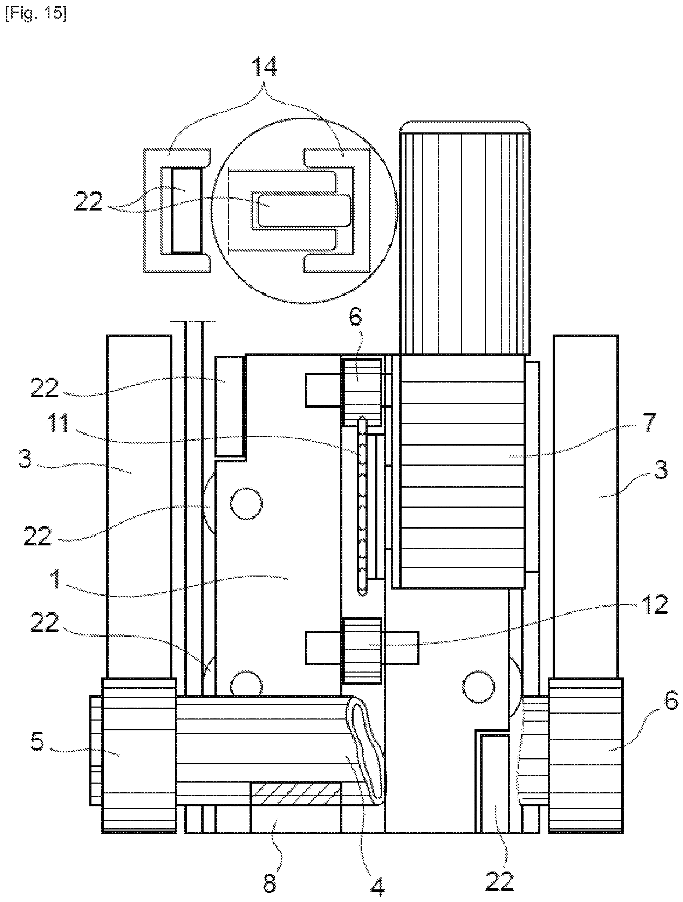

Les figures 9 à 15 montrent plus en détail des moyens mécaniques d'accostage de la portière 200 sur un charriot 1, et des moyens de pivotement puis de translation de ladite portière 200 sur le montant vertical 120 selon la cinématique prévue.

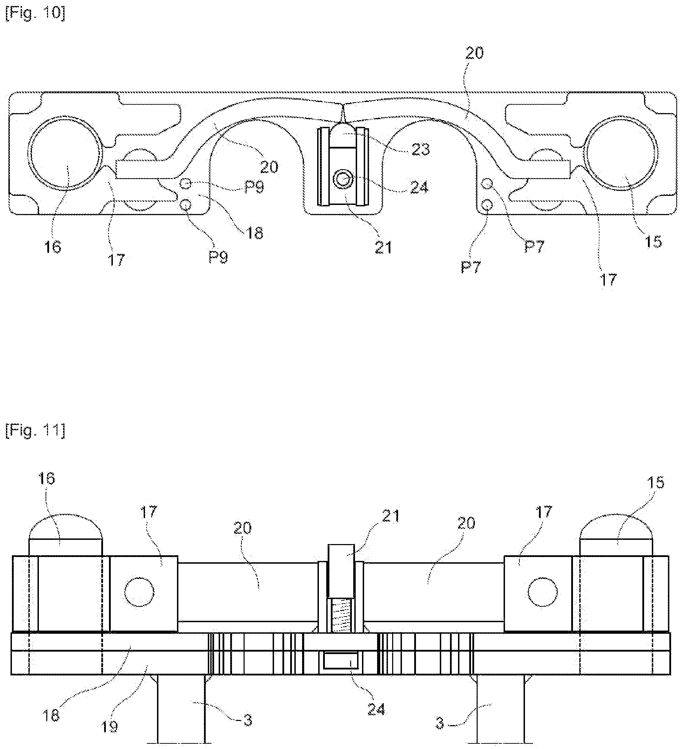

A cet effet, comme illustré plus en détail sur les figures 10, 11 et 14, le panneau 201 de la portière 200 comporte, sur sa partie basse de dessous et en son centre, une plaque 18 en aluminium qui est soudée à la structure de la portière, elle-même réalisée en profilés mécano soudés pour former le panneau à double épaisseur. Une seconde tôle en aluminium sert de peau extérieure à ce panneau bas 18 et est laquée à la couleur de carrosserie. Cette peau extérieure est assemblée par vis et par chicanes accessibles de l'intérieur quand la portière 200 est ouverte, ce qui rend cette tôle extérieure démontable pour la maintenance sans avoir à intervenir sur les garnitures intérieures.

Un autre aspect important de la présente invention est que la portière 200 constitue un élément indépendant de la caisse 110 et peut donc être façonné à la demande (commande spécifique du client, adaptation à des modèles différents de véhicule) et être apportée au dernier moment sur une chaine de montage d'une usine de fabrication de véhicules pour être assemblée à la caisse 110. En effet, le montage de la portière 200 est prévu pour être extrêmement simple et intuitif. Typiquement, ce dernier peut être effectué en moins de 10 secondes, notamment avec un robot d'assistance qui porte et positionne la portière 200 au plus près du charriot 1.

Ainsi, la portière 200 peut s'accrocher facilement sur le charriot 1 à l'aide d'un système de mâchoires de serrage et de pion de positionnement.

A cet effet (figures 9 et 10), la plaque en aluminium 18 reçoit un système de montage/bridage comportant deux mâchoires 17 réalisées par exemple en aluminium, des cames 21 et 23 et une unique vis 24 qui agit sur ces dernières à l'aide de bras de levier en acier 20 de manière à resserrer les mâchoires 17 sur des pions d'accostage 15 et 16 verticaux dirigés vers le haut qui sont solidaires d'une plaque en acier 19 solidaire du charriot 1.

Plus précisément, une rotation de la vis centrale 24 dans un sens (par exemple horaire) provoque le resserrement des mâchoires 17 autour des pions d'accostage (appelés également ergots de montage) 15 et 16 grâce au mouvement synchronisé de pivotement des bras 20 poussés par les cames 21 et 23.

C'est également lors de cet accostage qu'un contact électrique est établi entre le bas de la portière 200 (au niveau de la plaque 18) et des moteurs 7 et 9 du charriot 1 à l'aide de plots de connexion P7 et P9 reliés à la batterie 208. Cette liaison électrique permet ainsi à la batterie 208 de la portière 200 d'alimenter en courant les moteurs 7 et 9.

La portière 200 est également pourvue d'un plot de recharge 209 coopérant, uniquement quand ladite portière est refermée (traits pleins de la figure 9), avec un connecteur 119 de la caisse 110 pour recharger ladite batterie interne 208 de 36V de la portière 200 avec la batterie 12V ou 14 V du véhicule 100. A noter que l'autonomie de la batterie intégrée 208 permet d'assurer une vingtaine d'ouverture/fermeture de la portière 200 sans avoir besoin d'être rechargée.

On notera que la portière 200 est montée de manière parfaitement équilibrée sur le charriot 1 afin que son centre de gravité soit alignée avec le centre du montant vertical 120. Cela évite une différence de poids entre l'avant et l'arrière de la portière 200 qui pourrait la déséquilibrer et/ou nuire à son déplacement (pivotement latéral vers l'extérieur et translation verticale).

Les moyens de pivotement latéral de la portière 200 par rapport à la caisse 110 (passage de la figure 4 à la figure 5) comportent principalement un axe longitudinal 8 de gros diamètre fixé par mécanosoudage sur le charriot 1, un moteur d'entrainement 9 d'un arbre 4 monté pivotant à l'intérieur de l'axe mécanosoudé 8 et reposant sur des paliers avant 5 et arrière 6, un réducteur planétaire 2 relié au moteur d'entrainement 9 à l'aide d'un axe 10, des bras 3 et 3bis reliés d'une part aux paliers 5 et 6 et d'autre part à la plaque en acier rigide 19 solidaire du charriot 1. Le réducteur planétaire 2 permet de démultiplier la force exercée par le moteur d'entrainement 9 pour faire pivoter le panneau 201 à l'aide de l'arbre longitudinal 8 et des paliers 5 et 6.

Les moyens de déplacement vertical de la portière 200 comportent quant à eux principalement un double moteur 7 monté sur le charriot 1, un pignon d'entrainement à chaîne 11, une chaîne fixe 13 monté en prise en partie dans les dents du pignon, des galets satellites de tension 12, et des rails 14 en forme de U solidaires du montant central 120 et recevant 4 paires de galets 22 en acier avec roulement à billes de précision intégrés circulant entre les ailes des rails en U définissant des chemins de roulement pour guider sans jeu la portière lors de ses déplacements de haut en bas et inversement en évitant tout mouvement de pivotement selon un axe vertical et tout déplacement transversal (droite/gauche) et longitudinal (avant/arrière) par rapport à la caisse 110.

Plus précisément, le double moteur 7 effectue la montée et la descente du panneau 201 de la portière 200 en faisant tourner le pignon à chaine 11, lequel s'engrène dans la chaîne 13 faisant office de crémaillère tendue entre les deux galets satellites 12 et fixés aux extrémités de rails 14 en forme de U. La rotation dans un sens du double moteur 7 fait monter la portière 200 le long des rails courbes 14, les différentes (4) paires de galets 22 à roulements à billes de précision permettant le guidage parfait et sans jeu de la portière 200 le long desdits rails 14.

A cet effet, deux paires de galets 22 superposés deux à deux sont disposés dans un premier rail 14 en forme de U (soudé au charriot 1) avec leurs axes respectifs de rotation s'étendant transversalement au véhicule (perpendiculairement à la direction de déplacement de ce dernier) pour éviter tout mouvement de la portière 200 d'avant en arrière et inversement, tandis que deux autres paires de galets 22 superposés deux à deux sont disposés dans un autre rail 14 en forme de U (monté de manière amovible sur le charriot 1 en face du premier rail) avec leurs axes respectifs de rotation disposés longitudinalement, perpendiculairement aux axes de rotation des premières paires de galets 22, de manière à éviter les mouvements de droite à gauche et inversement de la portière 200. Ceci permet par ailleurs à la portière de résister à d'éventuelles bourrasques de vent.

La rotation dans le sens inverse du double moteur 7 permet de faire redescendre la portière 200 de la deuxième position extrême haute ouverte (figures 2 et 6) à la première position extrême basse fermée (figures 1 et 3), laquelle reste guidée en permanence par les paires de galets 22 circulant à l'intérieur des rails 14 en forme de U.

Lorsque la portière 200 est dans sa deuxième position extrême haute, les crochets C qui pendent sous le rebord inférieur 204 du panneau 201 viennent tout naturellement s'accrocher dans des logements prévus à cet effet dans la partie supérieure de l'embrasure 112 de l'ouverture 111 (voir figure 2). Ceci permet ainsi un bridage en trois points (position centrale au niveau du charriot de transport 1, extrémité avant et extrémité arrière au niveau des crochets C) de la portière 200.

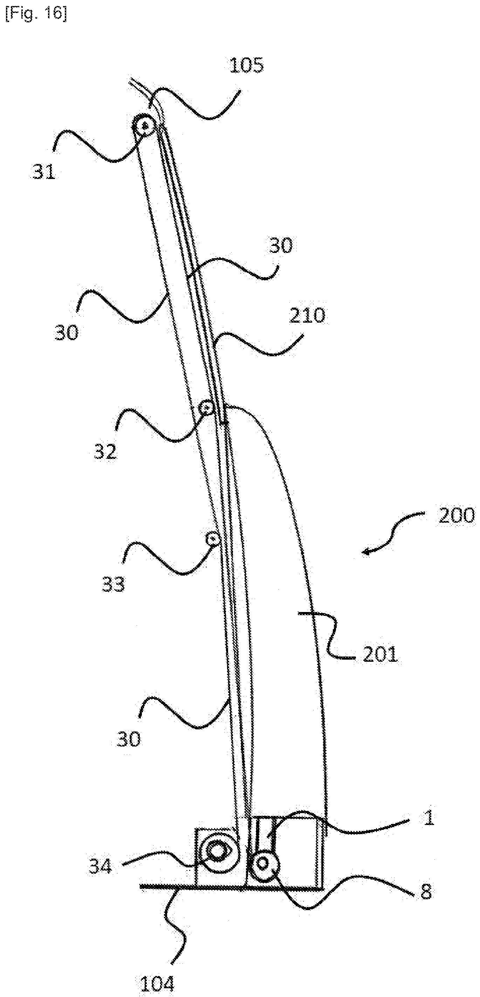

Le système de commande (carte électronique) est informé que les crochets C arrivent en prise dans l'embrasure 112 de l'ouverture 111 quand le couple du double moteur 7 augmente soudainement, ce qui indique que les crochets C retiennent la portière 200 et qu'elle ne peut pas monter plus haut. Le double moteur 7 assure ainsi le maintien de la portière 200 tant que l'instruction de rotation en sens inverse n'a pas été donnée par la carte électronique de pilotage. Plus précisément, un système de « contrepoids » à ressort et tambour à spirale représenté sur la figure 16 est prévu pour maintenir la portière en position haute afin de soulager le double moteur 7 dès lors que les crochets C sont en prise avec l'embrasure, ce qui permet d'arrêter le double moteur 7.

Lorsqu'une instruction de descente de la portière 200 est donnée, le double moteur 7 tourne dans le sens inverse de manière à faire circuler la chaine 13 dans le sens contraire et faire descendre le charriot 1 et la portière 200. Une fois que la portière 200 a atteint la première position extrême basse fermée (figures 1 et 3), les crochets C suspendus au rebord inférieur 204 de la portière peuvent rentre dans des logements prévus à cet effet en partie inférieure de l'embrasure 112 de l'ouverture 111.

Chaque portière possède sa propre carte électronique d'asservissement des moteurs avec en mémoire un logiciel renfermant une logique de commande associée pour générer les mouvements automatisés. Cette logique doit intégrer, pour chaque moteur, les consignes de couples, de vitesses et des sens de déplacement des pièces concernées (vitre, axe de pivotement, charriot) pour l'ouverture/la fermeture, l'arrêt des moteurs (y compris l'arrêt de sécurité en cas d'effort trop important mesuré notamment en cas d'obstacle, par exemple au-delà de 10 daN).

La caisse 110 peut être pourvue intérieurement d'au moins un bouton de commande (soit un bouton physique soit une commande via le système intégré de la planche de bord) pour piloter l'ouverture de chaque portière 200 ou de l'ensemble des portières 200 selon la cinématique indiquée précédemment. Un bouton du même type pourra également être prévu au niveau des passagers l'arrière, mais il sera verrouillable/déverrouillable par le conducteur pour des questions de sécurité. Avantageusement, un peu à la manière des systèmes de gestion des vitres électriques, le conducteur disposera d'un bouton pour chaque portière.

Une batterie de secours connectée à la carte électronique de pilotage de la portière 200 pourra être prévue à l'intérieur de la caisse 110 du véhicule 100 dans l'hypothèse où la batterie intégrée dans la portière 200 serait défectueuse ou déchargée, ceci afin de permettre l'ouverture/la fermeture de ladite portière par sécurité sur au moins un cycle complet.

Selon une alternative, il est possible d'utiliser un unique moteur 7 dont le motoréducteur à engrenages est de type planétaire (les pignons 11 engrenant la chaîne 13) pour permettre à l'utilisateur de monter ou descendre la porte manuellement en utilisant les caractéristique de réversibilité de ce type de motorisation. Cette solution de débrayage manuel permet d'éviter un système de secours compliqué et coûteux. Un système à barillet et tétons montés sur ressort de rappel pour engager l'arbre moteur avec les pignons du planétaire et pour les désengager pourra être utilisé afin de débrayer facilement l'arbre moteur et les pignons du système planétaire,

De manière corollaire, l'ensemble du charriot 1 et de la porte double 200 pourra être équipé d'un dispositif d'assistance au relevage par contrepoids, appelé également équilibreur.

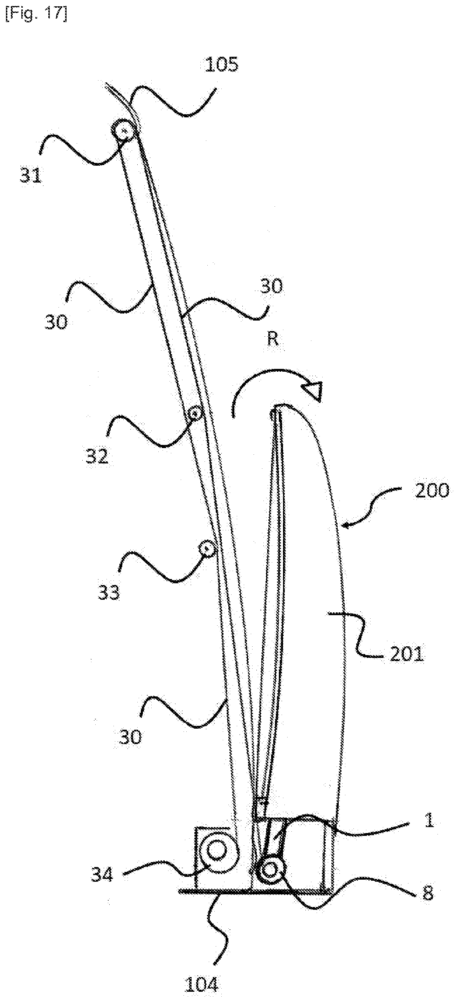

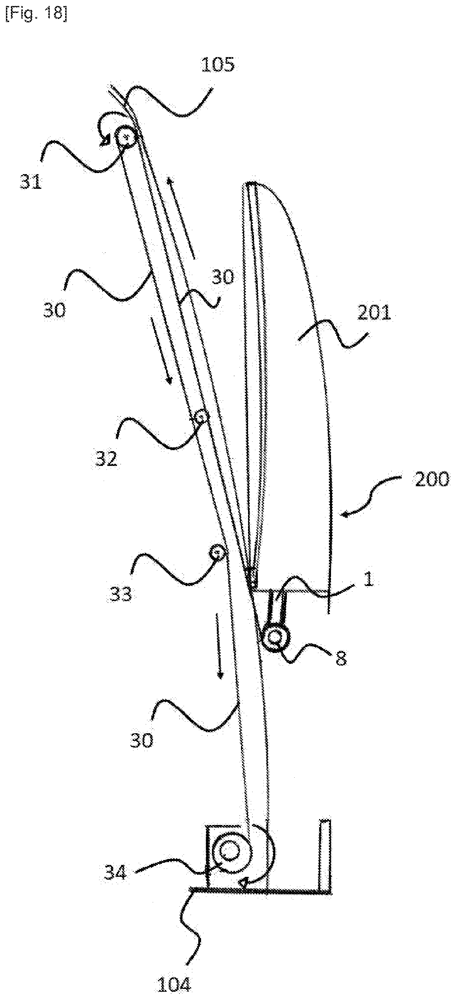

Ainsi, comme illustré sur les figures 16 à 18, un câble métallique tressé 30 de type aviation (grande souplesse et grande solidité) est solidaire de la partie inférieur du charriot 1. Ce câble 30 est tendu autour d'une première poulie supérieure de renvoi 31 positionnée dans le montant 120, proche du toit 105. Le câble 30 prend préalablement appui contre une première poulie intermédiaire 32 de courbure avant d'être enroulée tour autour de la première poulie haute 31 sur environ un demi-tour. Après son demi-tour autour de la première poulie supérieure 31, le câble 30 redescend pour être enroulée autour d'un tambour rotatif conique 34 de type connu (porte industrielle notamment) à ressort de rappel positionné proche de la ceinture de sécurité avant, contre le plancher 104. Le câble 30 prend au préalable appui contre une deuxième poulie intermédiaire 33 de courbure placée en dessous de la première poulie intermédiaire 32 de courbure. Le câble 30 est enroulé autour du tambour rotatif conique 34 à ressort de rappel par exemple sur plusieurs tours et permet de créer un équilibreur simple, compact et efficace, qui crée un contrepoids constant quelle que soit la position verticale de la porte 200, à l'ouverture comme à la fermeture.

Ainsi, lors de la levée de la porte 200, le contrepoids créé par le tambour rotatif conique 34 à ressort de rappel soulage le charriot 1 et permet à la porte 200 de rester en position haute sans redescendre. De même, lors de la descente de la porte 200, le contrepoids permet à l'inverse d'éviter une chute brutale de celle-ci jusqu'à sa position basse.

Une serrure de secours pourra être prévue dans un emplacement de la caisse 110 situé proche de la portière 200 de manière à débloquer son ouverture pour une utilisation de secours dans l'hypothèse où le transpondeur ne fonctionnerait pas ou la carte électronique serait défectueuse ou la batterie serait déchargée. A cet effet, une clé pourra être intégrée au transpondeur, comme cela se fait habituellement.

La présente invention permet ainsi de réaliser une portière double 200 (donnant accès aux places avant et arrière d'un même flanc) pour l'industrie de masse qui assume en toute sécurité une absence d'encombrement latéral grâce à un refoulement vertical sans débord. Cette caractéristique permettra également un accès aisé pour une personne en fauteuil roulant grâce à la constitution d'une aire totalement dégagée devant les deux ouvertures latérales de la caisse 110 du véhicule 100.

Cette portière robotisée 200, autonome avec sa batterie 208 embarquée, apporte donc une ergonomie et un confort inégalés à ce jour. Ainsi la portière 200 côté chauffeur à l'approche de celui-ci s'ouvre automatiquement grâce à son transpondeur dans sa poche ou dans sa montre. Dans le même esprit dès la libération de tous les sièges, les deux portières 200 se refermeront automatiquement au départ du conducteur et de ses passagers.

Le concept de portière double 200 sans débord et à refoulement vertical de la présente invention renforce et optimise la sécurité des passagers en cas de choc latéral tout en permettait au constructeur de conserver le principe de la coque hyper rigide grâce à son montant central 120 où sont par exemple placés les points d'ancrage des ceintures de sécurité des places avant. Les deux chemins de roulement hyper rigides étant solidaires du montant central pour cette porte double sans débord, cela renforce encore un peu plus la protection des passagers avant en cas d'impact latéral. De plus ce concept conserve les options : Toit ouvrant, toit panoramique, barre de toit ou galerie.

Malgré la cinématique complexe qui prévoit donc de faire remonter la portière 200 au-dessus du toit 105 du véhicule 100, ladite portière reste compatible avec les plafonds relativement bas des parkings urbains. Du fait de la présence d'une double vitre 210 affleurante, la hauteur réelle du panneau rigide 201 de la portière 200 est en réalité relativement faible de sorte que le système de la présente invention est tout à fait compatible avec des hauteurs de plafond d'environ 2m10 pour une berline (un peu plus pour un SUV/Break, un peu moins pour une voiture de sport), c'est-à-dire que l'invention est adaptée à la grande majorité des parkings souterrains.

Cette solution permet également de réduire le poids des véhicules par l'utilisation d'une portière double qui ne nécessite pas de système de charnières engendrant des surcoûts de conception/fabrication et des renforts pour supporter les poids des portières habituelles (en particulier celles à ouverture à la française).

Le design extérieur du véhicule n'est pour ainsi dire pas modifié, et la présence d'une double porte peut même permettre des formes de caisses qui n'étaient pas possibles auparavant. La solution peut d'ailleurs permettre de donner un aspect très épuré et moderne aux flancs du véhicule du fait du panneau de portière uniforme et continu entre l'avant et l'arrière, cet aspect étant renforcé par l'absence totale de poignée.

Ainsi, il y a toutefois lieu de noter qu'un tel mécanisme d'entraînement d'un ouvrant peut être adapté sur des véhicules appartenant à d'autres domaines techniques, tels que les domaines aéronautique, ferroviaire ou naval.

L'ensemble de la cinématique peut également être adapté à une portière de coffre (modèle de voiture dit « 5 portes), voire à un capot (modèle de voiture électrique dont le capot renferme un emplacement de rangement), dès lors que le principe général des différents mouvements (pivotement, vitre/déplacement vertical) et surtout du glissement vertical sans débord sont conservés.

## Revendications

1. Caisse (110) de véhicule automobile (100) comportant une structure porteuse/châssis s'étendant entre une extrémité avant (102) et une extrémité arrière (103) et présentant un plancher (104), un toit (105), et au moins un flanc latéral s'étendant au moins en partie entre lesdites deux extrémités, le plancher et le toit, ledit flanc latéral étant pourvu d'une ouverture (111) définie par une embrasure (112) et recevant un unique ouvrant (200), tel qu'une portière, articulé entre au moins une première position extrême basse fermée dans laquelle ledit ouvrant (200) occulte ladite ouverture (111) et une deuxième position extrême haute ouverte dans laquelle ledit ouvrant (200) est à l'écart de ladite ouverture (111) et est positionné au moins en partie au-dessus du toit (105), **caractérisée en ce que** la structure porteuse comporte un montant (120) traversant verticalement ladite ouverture (111) et un unique charriot (1) de transport vertical est montée mobile en translation de haut en bas et de bas en haut le long dudit montant (120) pour faire passer ledit ouvrant (200) de la première position extrême basse fermée à la deuxième position extrême haute ouverte, et inversement.

2. Caisse (110) de véhicule automobile (100) selon la revendication 1, **caractérisée en ce que**, l'ouvrant (200) présentant un profilé externe convexe épousant le flanc latéral de ladite structure porteuse dans la première position extrême basse fermée, la distance « d » entre ledit profilé externe et le flanc latéral est en permanence inférieure à quelques centimètres tout au long du passage dudit ouvrant (200) de la première position extrême basse fermée à la deuxième position extrême haute ouverte, de sorte que ledit ouvrant (200) est de type à ouverture vertical sans débord latéral.

3. Caisse (110) de véhicule automobile (100) selon la revendication 2, **caractérisée en ce que** l'ouvrant (200) présente une portion inférieure montée sur un arbre longitudinal de rotation (8) solidaire du charriot (1) de transport vertical de sorte que ledit ouvrant (200) peut prendre une position intermédiaire basculée extérieurement dans laquelle une portion supérieur de ce dernier s'écarte latéralement de l'ouverture (111) et du flanc, avant que ledit ouvrant (200) se déplace verticalement de ladite position intermédiaire basculée vers la deuxième position extrême haute ouverte.

4. Caisse (110) de véhicule automobile (100) selon la revendication 3, **caractérisée en ce que** l'angle de pivotement (α) de l'ouvrant (200) entre la première position extrême basse fermée et la position intermédiaire basculée est inférieur à 20°, de préférence compris entre environ 10° et environ 15°.

5. Caisse (110) de véhicule automobile (100) selon l'une quelconque des revendications 3 à 4, **caractérisée en ce que** l'arbre longitudinal de rotation (8) est relié à un premier moteur électrique (9) équipé d'un motoréducteur (2) pour le basculement de l'ouvrant.

6. Caisse (110) de véhicule automobile (100) selon l'une quelconque des revendications précédentes, **caractérisée en ce que** l'ouvrant (200) présente une vitre (201) mobile et un deuxième moteur électrique (206) équipé d'un motoréducteur pour abaisser cette dernière avant le déplacement de l'ouvrant (200) de la première position extrême basse fermée vers la deuxième position extrême haute ouverte, et pour la remonter une fois que ledit ouvrant (200) est de retour dans la première position extrême basse fermée.

7. Caisse (110) de véhicule automobile (100) selon l'une quelconque des revendications précédentes, **caractérisée en ce que** le charriot (1) de transport vertical est équipé d'au moins un troisième moteur électrique (7) équipé d'un motoréducteur pour le déplacement de l'ouvrant (200) le long du montant vertical (120).

8. Caisse (110) de véhicule automobile (100) selon la revendication 7, **caractérisée en ce que** le charriot (1) de transport vertical est équipé de deux moteurs électriques (7) disposés de part et d'autre du montant central (120) et reliés à un motoréducteur commun.

9. Caisse (110) de véhicule automobile (100) selon les revendications 5 à 8, **caractérisée en ce que** tous les moteurs (7, 9, 206) sont rassemblés en un seul moteur commun porté par le charriot (1) de transport vertical.

10. Caisse (110) de véhicule automobile (100) selon la revendication 5, **caractérisée en ce que** le premier moteur (9) de basculement est intégré au charriot (1) de transport vertical.

11. Caisse (110) de véhicule automobile (100) selon la revendication 6, **caractérisée en ce que** le deuxième moteur (206) de vitre est intégré à l'ouvrant (200).

12. Caisse (110) de véhicule automobile (100) selon l'une quelconque des revendications précédentes, **caractérisée en ce que** l'ouvrant (200) comporte une batterie secondaire (208) et des connecteurs électriques (209) et le montant vertical (120) comporte des plots de connexion électrique (119) coopérant avec lesdits connecteurs pour relier la batterie secondaire (208) à une batterie principale de la caisse (110) uniquement dans la première position extrême basse fermée de l'ouvrant (200) afin de recharger ladite batterie secondaire.

13. Caisse (110) de véhicule automobile (100) selon l'une quelconque des revendications précédentes, **caractérisée en ce que** l'ouvrant (200) est équipé d'au moins un crochet (C) adapté pour s'agripper à une partie supérieure de l'embrasure (112) lorsque l'ouvrant (200) est dans la deuxième position extrême haute ouverte afin de maintenir celui-ci dans cette position.

14. Caisse (110) de véhicule automobile (100) selon la revendication 13, **caractérisée en ce que** l'ouvrant (200) présente un premier crochet (C) en partie avant basse et un second crochet (C) en partie arrière basse, chacun de ces crochets (C) venant en prise dans un rebord prévu dans l'embrasure (112) de l'ouverture (111) pour immobiliser ledit ouvrant (200) dans la deuxième position extrême haute ouverte, lesdits crochets (C) venant se loger librement à l'intérieur d'ouvertures respectives prévues à cet effet dans une partie inférieure de l'embrasure (112) dans la première position extrême basse fermée dudit ouvrant (200).

15. Caisse (110) de véhicule automobile (100) selon l'une quelconque des revendications précédentes, **caractérisée en ce que** l'ouvrant (200) est monté sur le charriot (1) de transport vertical de sorte que le poids dudit ouvrant (200) est réparti de manière identique de part et d'autre dudit charriot, c'est-à-dire entre l'avant et l'arrière de l'ouvrant, pour son équilibrage.

16. Caisse (110) de véhicule automobile (100) selon l'une quelconque des revendications précédentes, **caractérisée en ce que** le charriot (1) de transport vertical est solidaire du montant (120) et l'ouvrant (200) est monté de manière amovible et démontable sur le charriot (1) à l'aide d'une paire de pions mécaniques d'assemblage/montage/centrage (15, 16) coopérant avec deux mâchoires de serrage (17) pour son immobilisation.

17. Caisse (110) de véhicule automobile (100) selon la revendication 16, **caractérisée en ce que** les pions mécaniques (15, 16) sont solidaires du charriot (1) de transport vertical et les mâchoires de serrage (17) sont solidaires de l'ouvrant (200).

18. Caisse (110) de véhicule automobile (100) selon l'une quelconque des revendications précédentes, **caractérisée en ce que** l'ouvrant (200) comporte un tambour rotatif conique (34) à ressort de rappel équilibrant son poids pour son passage de la première position extrême basse fermée à la deuxième position extrême haute ouverte, et inversement, ledit ressort supportant la majorité du poids de l'ouvrant entre les deux positions extrêmes.

19. Caisse (110) de véhicule automobile (100) selon l'une quelconque des revendications précédentes, **caractérisée en ce que** le charriot (1) de transport vertical est mobile le long d'au moins un rail (14) ménagé sur le montant vertical (120).

20. Caisse (110) de véhicule automobile (100) selon la revendication 19, **caractérisée en ce que** le charriot (1) de transport vertical est pourvu de quatre paires de galets de guidage, deux premières paires de galets (22) superposés verticalement qui coulissent le long d'un premier rail (14) de guidage à section en « U » prévu sur le montant vertical (120), et deux secondes paires de galets (22) superposés verticalement coulissant dans un second rail (14) de guidage à section en « U » monté de manière amovible sur le montant vertical (120), en face et parallèlement audit premier rail (14) de guidage.

21. Caisse (110) de véhicule automobile (100) selon la revendication 20, **caractérisée en ce que** l'axe de rotation de l'ensemble des galets (22) des premières paires s'étend dans le sens longitudinal de la caisse, sensiblement parallèlement à la plus grande dimension de l'ouvrant, et l'axe de rotation de l'ensemble des galets (22) des secondes paires s'étend dans le sens transversal de la caisse, perpendiculairement à l'axe de rotation de l'ensemble des galets des premières paires.

22. Caisse (110) de véhicule automobile (100) selon l'une quelconque des revendications précédentes, **caractérisée en ce que**, dans la deuxième position extrême haute ouverte, au moins 90%, de préférence 100% de l'ouvrant (200) surplombe l'embrasure (112) de l'ouverture (111).

## Patentansprüche

1. Karosserie (110) eines Kraftfahrzeugs (100), die eine tragende Struktur/einen Rahmen aufweist, die/der sich zwischen einem vorderen Ende (102) und einem hinteren Ende (103) erstreckt und einen Boden (104), ein Dach (105) und mindestens eine Seitenflanke besitzt, die sich mindestens teilweise zwischen den beiden Enden, dem Boden und dem Dach erstreckt, wobei die Seitenflanke mit einer Öffnung (111) versehen ist, die durch eine Leibung (112) definiert ist und einen einzigen Flügel (200), wie eine Tür, aufnimmt, der zwischen mindestens einer ersten unteren geschlossenen Endposition, in der der Flügel (200) die Öffnung (111) verdeckt, und einer zweiten oberen geöffneten Endposition, in der der Flügel (200) von der Öffnung (111) beabstandet ist und mindestens teilweise über dem Dach (105) positioniert ist, angelenkt ist, **dadurch gekennzeichnet, dass** die tragende Struktur einen vertikal durch die Öffnung (111) führenden Ständer (120) und einen einzigen vertikalen Transportwagen (1) aufweist, der beweglich in Translation von oben nach unten und von unten nach oben entlang des Ständers (120) montiert ist, um den Flügel (200) von der ersten unteren geschlossenen Endposition in die zweite obere geöffnete Endposition und umgekehrt zu bewegen.

2. Karosserie (110) eines Kraftfahrzeugs (100) nach Anspruch 1, **dadurch gekennzeichnet, dass** der Flügel (200) ein konvexes Außenprofil besitzt, das die Seitenflanke der tragenden Struktur in der ersten unteren geschlossenen Endposition anschließt, der Abstand "d" zwischen dem Außenprofil und der Seitenflanke entlang des Übergangs des Flügels (200) von der ersten unteren geschlossenen Endposition zu der zweiten oberen geöffneten Endposition ständig weniger als einige Zentimeter beträgt, so dass der Flügel (200) vertikal öffnend ohne seitlichen Überstand ist.

3. Karosserie (110) eines Kraftfahrzeugs (100) nach Anspruch 2, **dadurch gekennzeichnet, dass** der Flügel (200) einen unteren Abschnitt aufweist, der auf einer Drehlängswelle (8) montiert ist, die mit dem vertikalen Transportwagen (1) fest verbunden ist, so dass der Flügel (200) eine nach außen gekippte Zwischenstellung einnehmen kann, in der sich ein oberer Abschnitt desselben seitlich von der Öffnung (111) und der Flanke wegbewegt, bevor sich der Flügel (200) vertikal von der gekippten Zwischenstellung in die zweite obere geöffnete Endposition bewegt.

4. Karosserie (110) eines Kraftfahrzeugs (100) nach Anspruch 3, **dadurch gekennzeichnet, dass** der Schwenkwinkel (α) des Flügels (200) zwischen der ersten unteren geschlossenen Endposition und der gekippten Zwischenstellung kleiner als 20°, vorzugsweise zwischen etwa 10° und etwa 15° ist.

5. Karosserie (110) eines Kraftfahrzeugs (100) nach einem der Ansprüche 3 bis 4, **dadurch gekennzeichnet, dass** die Drehlängswelle (8) mit einem ersten Elektromotor (9) in Verbindung steht, der mit einem Getriebemotor (2) zum Kippen des Flügels ausgestattet ist.

6. Karosserie (110) eines Kraftfahrzeugs (100) nach einem der vorhergehenden Ansprüche, **dadurch gekennzeichnet, dass** der Flügel (200) eine bewegliche Fensterscheibe (201) und einen zweiten Elektromotor (206) besitzt, der mit einem Getriebemotor ausgestattet ist, um diese vor dem Bewegen des Flügels (200) von der ersten unteren geschlossenen Endposition in die zweite obere geöffnete Endposition abzusenken, und um sie wieder anzuheben, sobald der Flügel (200) in die erste untere geschlossene Endposition zurückkehrt.

7. Karosserie (110) eines Kraftfahrzeugs (100) nach einem der vorhergehenden Ansprüche, **dadurch gekennzeichnet, dass** der vertikale Transportwagen (1) mit mindestens einem dritten Elektromotor (7) ausgestattet ist, der mit einem Getriebemotor für die Bewegung des Flügels (200) entlang des vertikalen Ständers (120) ausgestattet ist.

8. Karosserie (110) eines Kraftfahrzeugs (100) nach Anspruch 7, **dadurch gekennzeichnet, dass** der vertikale Transportwagen (1) mit zwei Elektromotoren (7) ausgestattet ist, die auf beiden Seiten des Mittelträgers (120) angeordnet und mit einem gemeinsamen Getriebemotor in Verbindung stehen.

9. Karosserie (110) eines Kraftfahrzeugs (100) nach den Ansprüchen 5 bis 8, **dadurch gekennzeichnet, dass** alle Motoren (7, 9, 206) zu einem einzigen gemeinsamen Motor zusammengefasst sind, der von dem vertikalen Transportwagen (1) getragen wird.

10. Karosserie (110) eines Kraftfahrzeugs (100) nach Anspruch 5, **dadurch gekennzeichnet, dass** der erste Kippmotor (9) in den vertikalen Transportwagen (1) integriert ist.

11. Karosserie (110) eines Kraftfahrzeugs (100) nach Anspruch 6, **dadurch gekennzeichnet, dass** der zweite Fensterscheibenmotor (206) in den Flügel (200) integriert ist.

12. Karosserie (110) eines Kraftfahrzeugs (100) nach einem der vorhergehenden Ansprüche, **dadurch gekennzeichnet, dass** der Flügel (200) eine Sekundärbatterie (208) und elektrische Steckverbinder (209) aufweist und der vertikale Ständer (120) elektrische Verbindungsbolzen (119) aufweist, die mit den Steckverbindern zusammenwirken, um die Sekundärbatterie (208) nur in der ersten unteren geschlossenen Endposition des Flügels (200) mit einer Hauptbatterie des Flügels (110) in Verbindung zu bringen, um die Sekundärbatterie aufzuladen.

13. Karosserie (110) eines Kraftfahrzeugs (100) nach einem der vorhergehenden Ansprüche, **dadurch gekennzeichnet, dass** der Flügel (200) mit mindestens einem Haken (C) ausgestattet ist, der zum Greifen an einem Kopfteil der Leibung (112) geeignet ist, wenn sich der Flügel (200) in der zweiten oberen geöffneten Endposition befindet, um ihn in dieser Position zu halten.

14. Karosserie (110) eines Kraftfahrzeugs (100) nach Anspruch 13, **dadurch gekennzeichnet, dass** der Flügel (200) einen ersten Haken (C) in dem unteren vorderen Teil und einen zweiten Haken (C) in dem unteren hinteren Teil besitzt, wobei jeder dieser Haken (C) in einen Rand greift, der in der Leibung (112) der Öffnung (111) vorgesehen ist, um den Flügel (200) in der zweiten oberen geöffneten Endposition zu fixieren, wobei die Haken (C) frei in zu diesem Zweck vorgesehenen jeweiligen Öffnungen in einem unteren Teil der Leibung (112) in der ersten unteren geschlossenen Endposition des Flügels (200) untergebracht werden.

15. Karosserie (110) eines Kraftfahrzeugs (100) nach einem der vorhergehenden Ansprüche, **dadurch gekennzeichnet, dass** der Flügel (200) auf dem vertikalen Transportwagen (1) montiert ist, so dass das Gewicht des Flügels (200) auf beiden Seiten des Wagens, d. h. zwischen der Vorder- und Rückseite des Flügels, zum Ausgleich gleichmäßig verteilt ist.

16. Karosserie (110) eines Kraftfahrzeugs (100) nach einem der vorhergehenden Ansprüche, **dadurch gekennzeichnet, dass** der vertikale Transportwagen (1) fest mit dem Träger (120) verbunden ist und der Flügel (200) mithilfe eines Paares mechanischer Zusammenbau-/Montage-/Zentrierstifte (15, 16), die mit zwei Klemmbacken (17) zusammenwirken, zur Arretierung des Wagens (1) beweglich und demontierbar montiert ist.

17. Karosserie (110) eines Kraftfahrzeugs (100) nach Anspruch 16, **dadurch gekennzeichnet, dass** die mechanischen Stifte (15, 16) fest mit dem vertikalen Transportwagen (1) verbunden sind und die Klemmbacken (17) fest mit dem Flügel (200) verbunden sind.

18. Karosserie (110) eines Kraftfahrzeugs (100) nach einem der vorhergehenden Ansprüche, **dadurch gekennzeichnet, dass** der Flügel (200) eine konische Drehtrommel (34) mit Rückstellfeder aufweist, die ihr Gewicht für den Übergang von der ersten unteren geschlossenen Endposition in die zweite obere geöffnete Endposition ausgleicht, und umgekehrt, wobei die Feder den Großteil des Gewichts des Flügels zwischen den beiden Endpositionen trägt.

19. Karosserie (110) eines Kraftfahrzeugs (100) nach einem der vorhergehenden Ansprüche, **dadurch gekennzeichnet, dass** der vertikale Transportwagen (1) entlang mindestens einer an dem vertikalen Ständer (120) vorgesehenen Schiene (14) beweglich ist.

20. Karosserie (110) eines Kraftfahrzeugs (100) nach Anspruch 19, **dadurch gekennzeichnet, dass** der vertikale Transportwagen (1) mit vier Paaren Führungsrollen versehen ist, zwei ersten Paaren vertikal übereinander angeordneter Rollen (22), die entlang einer ersten Führungsschiene (14) mit U-förmigem Querschnitt gleiten, die an dem vertikalen Träger (120) vorgesehen ist, und zwei zweite Paare vertikal übereinander angeordneter Rollen (22), die in einer zweiten Führungsschiene (14) mit U-förmigem Querschnitt gleiten, die abnehmbar an dem vertikalen Träger (120) gegenüber und parallel zu der ersten Führungsschiene (14) angebracht ist.

21. Karosserie (110) eines Kraftfahrzeugs (100) nach Anspruch 20, **dadurch gekennzeichnet, dass** sich die Drehachse der gesamten Rollen (22) der ersten Paare in Längsrichtung der Karosserie, im Wesentlichen parallel zu der größten Abmessung des Flügels, und die Drehachse der gesamten Rollen (22) der zweiten Paare in Querrichtung der Karosserie, vertikal zu der Drehachse der gesamten Rollen der ersten Paare, erstreckt.

22. Karosserie (110) eines Kraftfahrzeugs (100) nach einem der vorhergehenden Ansprüche, **dadurch gekennzeichnet, dass** in der zweiten oberen geöffneten Endposition mindestens 90 %, vorzugsweise 100 % des Flügels (200) über die Leibung (112) der Öffnung (111) ragt.

## Claims

1. A body (110) of a motor vehicle (100) comprising a supporting structure/chassis extending between a front end (102) and a rear end (103) and having a floor (104), a roof (105), and at least one lateral flank extending at least partially between said two ends, the floor and the roof, said lateral flank being provided with an opening (111) defined by an embrasure (112) and receiving a single opening leaf (200), such as a door, articulated between at least a first bottom closed position wherein said opening leaf (200) conceals said opening (111) and a second top open position wherein said opening leaf (200) is spaced apart from said opening (111) and is positioned at least partially above the roof (105), **characterised in that** the supporting structure comprises a post (120) passing vertically through said opening (111), and a single vertical transport carriage (1) is mounted movable in translation from top to bottom and from bottom to top along said post (120) in order to pass said opening leaf (200) from the first bottom closed position to the second top open position, and vice versa.

2. The body (110) of a motor vehicle (100) according to claim 1, **characterised in that**, the opening leaf (200) having a convex outer profile moulding the lateral flank of said supporting structure in the first bottom closed position, the distance "d" between said outer profile and the lateral flank is always less than a few centimetres throughout the passage of said opening leaf (200) from the first bottom closed position to the second top open position, such that said opening leaf (200) is of the vertical opening type without lateral overhang.

3. The body (110) of a motor vehicle (100) according to claim 2, **characterised in that** the opening leaf (200) has a lower portion mounted on a longitudinal rotation shaft (8) secured to the vertical transport carriage (1) such that said opening leaf (200) can take an intermediate outwardly tilted position wherein an upper portion of the latter moves laterally apart from the opening (111) and the flank, before said opening leaf (200) moves vertically from said intermediate tilted position to the second top open position.

4. The body (110) of a motor vehicle (100) according to claim 3, **characterised in that** the pivot angle (α) of the opening leaf (200) between the first bottom closed position and the intermediate tilted position is less than 20°, preferably between about 10° and about 15°.

5. The body (110) of a motor vehicle (100) according to any one of claims 3 to 4, **characterised in that** the longitudinal rotation shaft (8) is connected to a first electric motor (9) equipped with a gear motor (2) for tilting the opening leaf.

6. The body (110) of a motor vehicle (100) according to any one of the preceding claims, **characterised in that** the opening leaf (200) has a movable window (201) and a second electric motor (206) equipped with a gear motor for lowering the latter before moving the opening leaf (200) from the first bottom closed position to the second top open position, and for raising it once said opening leaf (200) has returned to the first bottom closed position.

7. The body (110) of a motor vehicle (100) according to any one of the preceding claims, **characterised in that** the vertical transport carriage (1) is equipped with at least a third electric motor (7) equipped with a gear motor for moving the opening leaf (200) along the vertical post (120).

8. The body (110) of a motor vehicle (100) according to claim 7, **characterised in that** the vertical transport carriage (1) is equipped with two electric motors (7) disposed on either side of the central post (120) and connected to a common gear motor.

9. The body (110) of a motor vehicle (100) according to claims 5 to 8, **characterised in that** all the motors (7, 9, 206) are grouped into a single common motor borne by the vertical transport carriage (1).

10. The body (110) of a motor vehicle (100) according to claim 5, **characterised in that** the first tilting motor (9) is integrated into the vertical transport carriage (1).

11. The body (110) of a motor vehicle (100) according to claim 6, **characterised in that** the second window motor (206) is integrated into the opening leaf (200).

12. The body (110) of a motor vehicle (100) according to any one of the preceding claims, **characterised in that** the opening leaf (200) comprises a secondary battery (208) and electrical connectors (209) and the vertical post (120) comprises electrical connection pads (119) cooperating with said connectors to connect the secondary battery (208) to a main battery of the body (110) only in the first bottom closed position of the opening leaf (200) in order to charge said secondary battery.

13. The body (110) of a motor vehicle (100) according to any one of the preceding claims, **characterised in that** the opening leaf (200) is equipped with at least one hook (C) adapted to grip an upper part of the embrasure (112) when the opening leaf (200) is in the second top open position in order to hold the latter in this position.

14. The body (110) of a motor vehicle (100) according to claim 13, **characterised in that** the opening leaf (200) has a first hook (C) in the lower front part and a second hook (C) in the lower rear part, each of these hooks (C) engaging in a flange provided in the embrasure (112) of the opening (111) in order to lock said opening leaf (200) in the second top open position, said hooks (C) being housed freely inside respective openings provided for this purpose in a lower part of the embrasure (112) in the first bottom closed position of said opening leaf (200).

15. The body (110) of a motor vehicle (100) according to any one of the preceding claims, **characterised in that** the opening leaf (200) is mounted on the vertical transport carriage (1) such that the weight of said opening leaf (200) is distributed equally on either side of said carriage, i.e. between the front and rear of the opening leaf, for balancing thereof.

16. The body (110) of a motor vehicle (100) according to any one of the preceding claims, **characterised in that** the vertical transport carriage (1) is secured to the post (120) and the opening leaf (200) is mounted removable and dismountable on the carriage (1) using a pair of mechanical assembly/assembly/centring pins (15, 16) cooperating with two clamping jaws (17) for locking thereof.

17. The body (110) of a motor vehicle (100) according to claim 16, **characterised in that** the mechanical pins (15, 16) are secured to the vertical transport carriage (1) and the clamping jaws (17) are secured to the opening leaf (200).

18. The body (110) of a motor vehicle (100) according to any one of the preceding claims, **characterised in that** the opening leaf (200) comprises a conical rotary drum (34) with a return spring balancing its weight for its passage from the first bottom closed position to the second top open position, and conversely, said spring supporting the majority of the weight of the opening leaf between the two end positions.

19. The body (110) of a motor vehicle (100) according to any one of the preceding claims, **characterised in that** the vertical transport carriage (1) is movable along at least one rail (14) arranged on the vertical post (120).

20. The body (110) of a motor vehicle (100) according to claim 19, **characterised in that** the vertical transport carriage (1) is provided with four pairs of guide rollers, two first pairs of vertically stacked rollers (22) which slide along a first guide rail (14) with a U-shaped cross-section provided on the vertical post (120), and two second pairs of vertically stacked rollers (22) sliding in a second guide rail (14) with a U-shaped cross-section guide mounted removable on the vertical post (120), facing and parallel to said first guide rail (14).

21. The body (110) of a motor vehicle (100) according to claim 20, **characterised in that** the axis of rotation of the set of rollers (22) of the first pairs extends in the longitudinal direction of the body, substantially parallel to the largest dimension of the opening leaf, and the axis of rotation of the set of rollers (22) of the second pairs extends in the transverse direction of the body, perpendicular to the axis of rotation of the set of rollers of the first pairs.

22. The body (110) of a motor vehicle (100) according to any one of the preceding claims, **characterised in that**, in the second top open position, at least 90%, preferably 100% of the opening leaf (200) overhangs the embrasure (112) of the opening (111).
